# EUROPEAN PATENT APPLICATION

(11) **EP 0 958 971 A2**
(43) Date of publication of application: **24.11.1999**
(21) Application number: 99108674.5
(22) Date of filing: 17.05.1999
(51) Int. Cl.: B60R 21/20, E05B 51/02

(54) **Airbag device**

(30) Priority: 20.05.1998 JP 13852998
(71) Applicant: TAKATA CORPORATION, Minato-ku, Tokyo (JP)
(72) Inventor: Fujimura, Yoshiichi, Minato-ku, Tokyo (JP)
(74) Representative: Weisert, Annekäte, Dipl.-Ing. Dr.-Ing.

(57) **Abstract**

An airbag device is provided in which an airbag can be sufficiently quickly inflated even when the gas pressure produced by an inflator is low. One edge portion of a lid (16) is pivotally connected to a container (10) by a pivot (18) and a bracket (20) so that the lid can open as a door. A loop (22) is disposed on a rear surface of the other edge portion, opposite to the one edge portion, of the lid (16). A rod (26) of an air cylinder (24) as an actuator is inserted through the loop (22). A portion near the head of the air cylinder (24) communicates with a rear portion of the container (10) through a tube (32). As an inflator (14) is actuated to spout gas, the gas pressure thus produced is introduced into the air cylinder (24). As a result, the piston (28) is pushed to move the rod (26) backward so that the rod (26) comes off the loop (22). The lid (16) is pushed by the inflating airbag to quickly open, whereby the airbag (12) inflates into a cabin.

## Description

### BACKGROUND OF THE INVENTION AND RELATED ART STATEMENT

The present invention relates to an airbag device and, more particularly, to an airbag device for a passenger which is preferably installed in an instrument panel of a vehicle and which inflates an airbag at a vehicle collision to protect a passenger.

An airbag device for a passenger comprise a vessel called container, an airbag which is folded and accommodated in the container, an inflator attached to the container, and a lid provided at the container to cover the airbag. When a vehicle comes into collision, the inflator is actuated to inflate the airbag. The airbag on inflation pushes the lid so that the lid opens into a cabin, whereby the airbag is largely inflated into the cabin to protect the occupant.

The lid is attached to the container in such a manner that the lid can pivot about one side thereof relative to the container. The other side of the lid is connected to the container by a connecting member made of synthetic resin which is fragile to separate from the container. When the airbag is inflated, the connecting member is broken so that the lid pivots about the one side to open like a door.

Large energy is required to break the connecting member made of synthetic resin, so that the inflator employed should have large capacity to generate gases in a high pressure.

### OBJECT AND SUMMARY OF THE INVENTION

An object of the present invention is to provide an airbag device which allows an airbag to be sufficiently quickly inflated even when the inflator generates gases in a low pressure.

An airbag device of the present invention has a container being in a box shape and having an opening in a front side thereof, an airbag folded and accommodated in the container, an inflator attached to the container, and a lid covering the opening of the container. The lid has a first edge portion which is pivotally attached to the container and a second edge portion, opposite to the first edge portion, which can be separated from the container when the inflator generates gases. The airbag device further has a locking mechanism for locking or connecting firmly the second edge portion of the lid to the container, and an actuator for unlocking the locking mechanism.

The locking mechanism is unlocked when the airbag is inflated so that the lid opens smoothly into a cabin. The actuator may have an air cylinder into which gas from the inflator is introduced.

### BRIEF DESCRIPTION OF THE DRAWINGS

Fig. 1a is a sectional view of a passenger airbag device according to an embodiment of the present invention, Fig. 1b is a sectional view taken along a line Ib-Ib of Fig. 1a; and

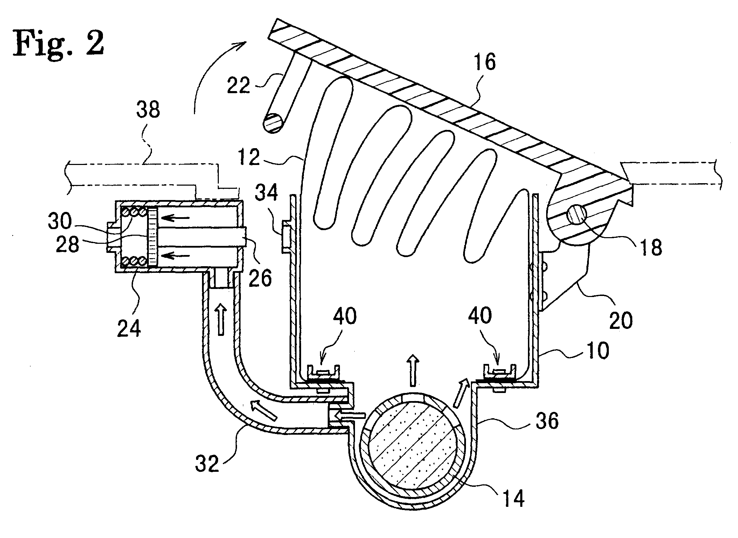

Fig. 2 is a sectional view of the airbag device in operation.

### DETAILED DESCRIPTION OF PREFERRED EMBODIMENTS

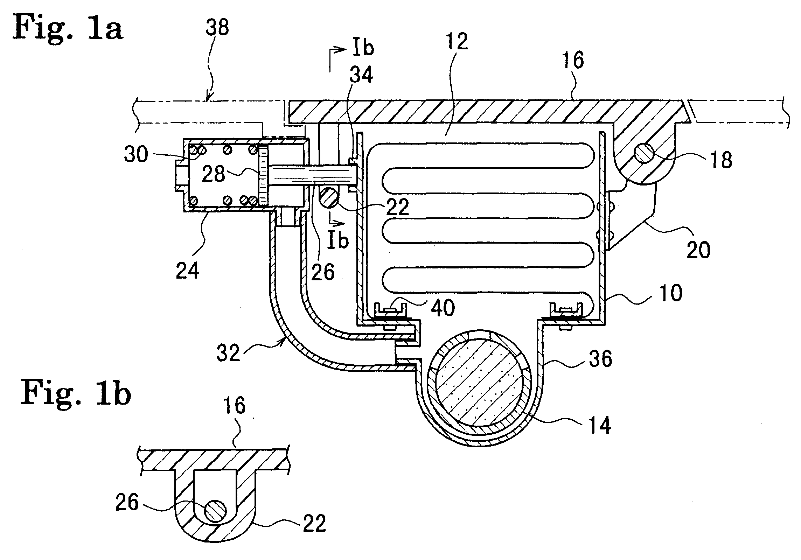

Hereinafter, an embodiment of the present invention will be described with reference to the attached drawings. An airbag 12 is folded and accommodated in a box-like container 10 having an opening in the front side thereof. An inflator 14 for deploying the airbag 12 is disposed in a rear portion of the container 10. A lid 16 for covering the front opening of the container 10 is pivotally connected to the container 10 at a first edge portion of the lid 16 by a pivot 18 and a bracket 20 in such a manner that the lid 16 can open like a door. Disposed on a rear face of a second edge portion, opposite to the first edge portion, of the lid 16 is a loop 22. A rod 26 of an air cylinder 24 as an actuator is inserted through the loop 22. The rod 26 is integral with a piston 28. The piston 28 is biased by a biasing spring 30 in a direction toward the cylinder head (i.e. to the right in Fig. 1a). A portion near the head of the air cylinder 24 communicates with a rear portion of the container 10 through a tube 32. Formed on an outer surface of the container 10 is a rod-engaging portion 34 to which the end of the rod 26 is fitted. The rod 26, the rod-engaging portion 34, and the loop 22 compose a locking mechanism.

In this embodiment, the container 10 comprises an inflator-receiving chamber 36 which protrudes from the rear side of the container 10. The tube 32 is connected to the chamber 36. Numeral 38 designates an instrument panel and numeral 40 designates a holding plate for securing the airbag.

In the airbag device structured as mentioned above, when the inflator 14 is actuated at a vehicle collision or a roll-over, gas is spouted from the inflator 14 and a part of the gas is introduced into the air cylinder 24. The piston 28 is then pushed and the rod 26 moves backward to come off the loop 22. The second edge portion (the left end side in Fig. 1a) of the lid 16 becomes free from the container 10 and the lid is pushed by the airbag 12 on inflation to quickly open so that the airbag 12 inflates into a cabin.

In the airbag device, it is not required to break a connecting member for allowing the lid to open. The airbag 12 can be sufficiently quickly inflated into the cabin even when the inflator 14 generates gases in a low pressure.

Though the air cylinder is employed as the actuator in this embodiment, the rod 26 may be moved backward by a solenoid. The rod 26 may be biased to move backward by a spring and a latch mechanism for preventing the backward movement of the rod 26 may be provided. In this case, the rod 26 is moved backward by canceling the latch of the latch mechanism.

Though the aforementioned embodiment relates to an airbag device which is installed in an instrument panel in front of a passenger's seat, the present invention can be applied to various airbag devices including an airbag device for a rear seat and a roof-side airbag device for protecting a head of an occupant.

As mentioned above, in the airbag device of the present invention, it can eliminate the necessity of breaking the connecting member for the purpose of opening the lid so that the airbag can be sufficiently quickly inflated into the cabin even the inflator generates gases in a low pressure.

## Claims

1. An airbag device comprising:
a container with an opening in the front side thereof;
an airbag folded and accommodated in the container;
an inflator attached to the container; and
a lid covering the opening of said container and having a first edge portion which is pivotally attached to the container and a second edge portion, opposite to the first edge portion, which can be separated from the container when said inflator is actuated,
wherein said airbag device further comprises a locking mechanism for locking said second edge portion of said lid and an actuator for unlocking the locking mechanism.

2. The airbag device as claimed in claim 1, wherein said actuator is an air cylinder into which gas from said inflator is introduced so as to unlock the lock.

3. The airbag device as claimed in claim 2, wherein a rear portion of the container and said air cylinder are connected to each other through a tube.

4. The airbag device as claimed in claim 3, wherein said container is provided with a chamber protruding from the rear side of the container, the inflator is disposed in said chamber, and the tube is connected to the chamber.

5. The airbag device as claimed in any one of claims 2 through 4, wherein a loop is disposed on the rear surface of the second edge portion of said lid, and a piston rod of the air cylinder is biased to enter into the loop by a spring, wherein the piston rod moves backward to come off the loop when the inflator generates the gas, thereby releasing the lock.

6. The airbag device as claimed in claim 5, wherein the end of the piston rod is fitted into an engaging portion formed on a side surface of the container.

7. The airbag device as claimed in any one of claims 1 through 6, wherein the first edge portion of the lid is pivotally attached to the container by a pivot.
